# EUROPEAN PATENT APPLICATION

(11) **EP 4 722 561 A1**
(43) Date of publication of application: **08.04.2026**
(21) Application number: 24814895.9
(22) Date of filing: 27.02.2024
(51) Int. Cl.: F16H 1/06, F16H 55/08

(54) **GEAR MECHANISM**

(30) Priority: 30.05.2023 JP 2023089067
(71) Applicant: Techno Dynamics Inc., Kikugawa-shi, Shizuoka 439-0031 (JP)
(72) Inventor: ITO, Hisayoshi, Kikugawa-shi, Shizuoka 439-0031 (JP); HAYAKAWA, Akihiro, Kikugawa-shi, Shizuoka 439-0031 (JP)
(74) Representative: karo IP
(86) International application number: PCT/JP2024/007084
(87) International publication number: WO 2024/247408

(57) **Abstract**

A gear mechanism including an externally toothed circular gear having M circular teeth and rotating around a first central axis, and an externally toothed non-circular gear having N non-circular teeth and rotating around a second central axis separated by a predetermined distance D from the first central axis, wherein the circular teeth of the externally toothed circular gear have a circular gear tooth tip portion and a circular gear tooth side portion located on sides of the circular gear tooth tip portion and having a circular shape of radius r, the non-circular teeth of the externally toothed non-circular gear have a non-circular gear tooth tip portion and a non-circular gear tooth side portion located on the sides of the non-circular gear tooth tip portion and in contact with the circular gear tooth side portion, wherein the shape of at least a part of the non-circular gear tooth side portion is such that, when a virtual circle of radius D x N/(M + N) centered on the second central axis is taken as a fixed circle, a virtual circle of radius D x M/(M + N) centered on the first central axis is taken as a moving circle, and the center of the circular gear tooth side portion is taken as a drawing point, the epitrochoid curve drawn is an offset epitrochoid curve offset by a length r.

## Description

### [Technical Field]

The present invention relates to a gear mechanism.

### [Background Art]

A gear mechanism including an externally toothed gear that rotates about a first central axis and an externally toothed gear that rotates about a second central axis spaced a predetermined distance apart from the first central axis is well known.

### [Citation List]

### [Patent Literature]

[Patent Document 1] Japanese Patent Application Publication No. 2012-82893

### [Summary of Invention]

### [Technical Problem]

Conventionally, such gear mechanisms have a drawback in that while one externally toothed gear rotates at a constant speed, the other externally toothed gear wobbles and the speed varies (called speed variation). Therefore, there has been a demand for a gear mechanism with a new tooth shape that does not have such a drawback.

The present invention has been made in view of the foregoing problem, and has as its object to provide a gear mechanism that is effective in appropriately suppressing speed variation.

### [Solution to Problem]

To achieve the above object, the present invention provides a gear mechanism having an externally toothed circular gear having M circular teeth and rotating around a first central axis, and an externally toothed non-circular gear having N non-circular teeth and rotating around a second central axis separated by a predetermined distance D from the first central axis,
the circular teeth of the externally toothed circular gear have a circular gear tooth tip portion and a circular gear tooth side portion located on sides of the circular gear tooth tip portion and having a circular shape of radius r,
the non-circular teeth of the externally toothed non-circular gear have a non-circular gear tooth tip portion and a non-circular gear tooth side portion located on sides of the non-circular gear tooth tip portion and in contact with the circular gear tooth side portion of the externally toothed circular gear, and
at least a part of the non-circular gear tooth side portion has a shape such that, when a virtual circle of radius D×N/(M+N) centered on the second central axis is defined as a fixed circle, a virtual circle of radius D×M/(M+N) centered on the first central axis is defined as a moving circle, and the center of the circular gear tooth side portion is defined as a drawing point, a drawn epitrochoid curve is offset by a length r and becomes an offset epitrochoid curve.

Other features of the present invention will become apparent from the following detailed description and accompanying drawings.

### [BRIEF DESCRIPTION OF DRAWINGS]

FIG. 1 is an explanatory diagram illustrating a gear mechanism 1 according to an embodiment of the present invention.
FIG. 2 is an explanatory diagram illustrating circular teeth 14 of the externally toothed circular gear 10 according to the present embodiment.
FIG. 3 is a diagram showing how to draw an epitrochoid curve EP.
FIG. 4 is a diagram showing another way of drawing the epitrochoid curve EP.
FIG. 5 is an explanatory diagram illustrating the behavior of a cam mechanism including a cam 60 according to an epitrochoid curve EP and a cam follower 62a with a radius of 0.
FIG. 6 is an explanatory diagram illustrating an offset epitrochoid curve OEP.
FIG. 7 is an explanatory diagram illustrating the behavior of a cam mechanism including a cam 60 according to an offset epitrochoid curve OEP and a cam follower 62a according to a circle of radius r.
FIG. 8 is an explanatory diagram illustrating non-circular teeth 34 of the externally toothed non-circular gear 30 according to the present embodiment.
FIG. 9 is a diagram showing the correspondence between teeth sides.

### [Description of Embodiments]

At least the following matters will become apparent from the description of the present invention in this specification and the accompanying drawings.

A gear mechanism having an externally toothed circular gear having M circular teeth and rotating around a first central axis, and an externally toothed non-circular gear having N non-circular teeth and rotating around a second central axis separated by a predetermined distance D from the first central axis,
the circular teeth of the externally toothed circular gear has a circular gear tooth tip portion and a circular gear tooth side portion located on sides of the circular gear tooth tip portion and having a circular shape of radius r,
the non-circular teeth of the externally toothed non-circular gear have a non-circular gear tooth tip portion and a non-circular gear tooth side portion located on sides of the non-circular gear tooth tip portion and in contact with the circular gear tooth side portion, and
at least a part of the non-circular gear tooth side portion has a shape such that, when a virtual circle of radius D×N/(M+N) centered on the second central axis is defined as a fixed circle, a virtual circle of radius D×M/(M+N) centered on the first central axis is defined as a moving circle, and the center of the circular gear tooth side portion is defined as a drawing point, a drawn epitrochoid curve is offset by a length r and becomes an offset epitrochoid curve.

According to such a gear mechanism, it is possible to achieve a gear mechanism that exhibits the effect of suppressing speed variation.

In such a gear mechanism, the shape of all of the non-circular gear tooth side portion that contacts the circular gear tooth side portion may be formed so that, when a virtual circle of radius D×N/(M+N) centered on the second central axis is defined as a fixed circle, a virtual circle of radius D×M/(M+N) centered on the first central axis is defined as a moving circle, and the center of the circular gear tooth side portion is defined as a drawing point, the drawn epitrochoid curve is offset by a length r and becomes an offset epitrochoid curve.

According to such a gear mechanism, it is possible to achieve a gear mechanism that can more appropriately suppress speed variation.

In such a gear mechanism, the circular gear tooth side portion is a first circular gear tooth side portion,
the circular teeth of the externally toothed circular gear are provided with a second circular gear tooth side portion located on sides of the circular gear tooth tip portion and having a circular shape of radius r located on the opposite side of the first circular gear tooth side portion as viewed from the circular gear tooth tip portion, the second circular gear tooth side portion having a center different from a center of the first circular gear tooth side portion,
the non-circular teeth are first non-circular teeth,
the externally toothed non-circular gear has second non-circular teeth different from the first non-circular teeth,
the second non-circular teeth of the externally toothed non-circular gear have a non-circular gear tooth tip portion and a non-circular gear tooth side portion located on sides of the non-circular gear tooth tip portion and in contact with the second circular gear tooth side portion, and
at least a part of the non-circular gear tooth side portion of the second non-circular teeth may be formed to have a shape such that, when a virtual circle of radius D×N/(M+N) centered on the second central axis is defined as a fixed circle, a virtual circle of radius D×M/(M+N) centered on the first central axis is defined as a moving circle, and the center of the second circular gear tooth side portion is defined as a drawing point, the drawn epitrochoid curve is offset by a length r and becomes an offset epitrochoid curve.

According to such a gear mechanism, it is possible to achieve a gear mechanism that can more appropriately suppress speed variation.

In such a gear mechanism, the shape of all the portion of the non-circular gear tooth side portion of the second non-circular teeth that contact the second circular gear tooth side portion may be formed to have a shape such that, when a virtual circle of radius D×N/(M+N) centered on the second central axis is defined as a fixed circle, a virtual circle of radius D×M/(M+N) centered on the first central axis is defined as a moving circle, and the center of the second circular gear tooth side portion is defined as a drawing point, the drawn epitrochoid curve is offset by a length r and becomes an offset epitrochoid curve.

According to such a gear mechanism, it is possible to achieve a gear mechanism that can more appropriately suppress speed variation.

### Gear Mechanism 1 of the Present Embodiment

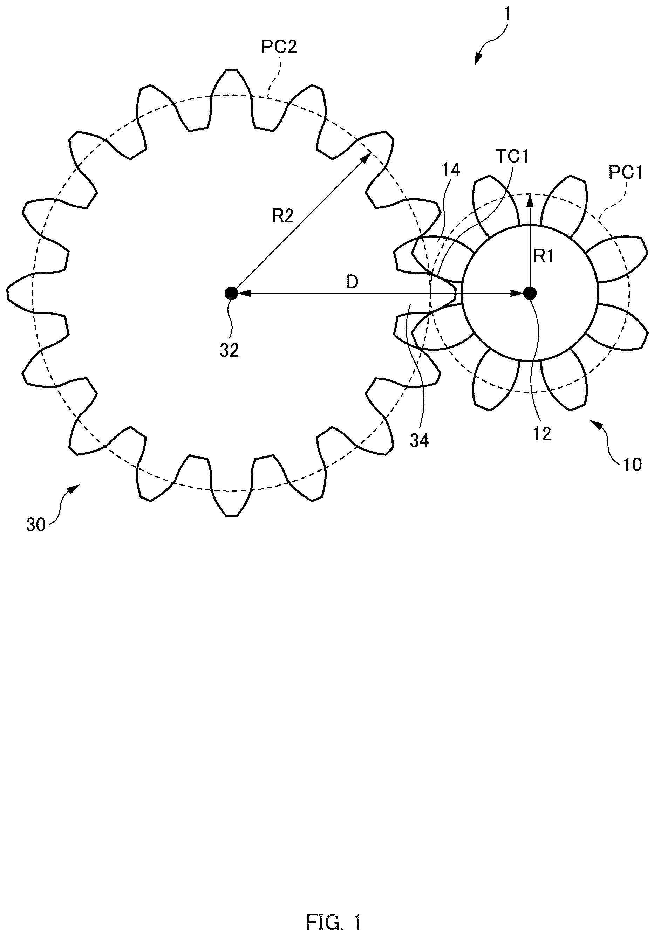

Next, a gear mechanism 1 according to the present embodiment is described with reference to FIG. 1. FIG. 1 is an explanatory diagram illustrating the gear mechanism 1 according to the present embodiment.

The gear mechanism 1 includes two externally toothed gears (external gears) that mesh with each other. As described in detail below, the teeth of one gear are circular while the teeth of the other gear are not. Therefore, for convenience, the former gear is referred to as the externally toothed circular gear 10 and the latter gear is referred to as the externally toothed non-circular gear 30.

The externally toothed circular gear 10 is a gear that rotates around a first central axis 12 and has M (eight in the present embodiment) teeth (for convenience, referred to as circular teeth 14). In other words, the number of teeth M of the externally toothed circular gear 10 is eight.

The externally toothed non-circular gear 30 is a gear that rotates around a second central axis 32 that is a predetermined distance (i.e., inter-axis distance D) away from the first central axis 12, and has N teeth (16 in the present embodiment) (for convenience, referred to as non-circular teeth 34).

The circular teeth 14 and the non-circular teeth 34 mesh with each other.

It should be noted that the number of teeth M and the number of teeth N are not limited to 8 and 16 (the number of teeth M and the number of teeth N may be the same).

Furthermore, the externally toothed circular gear 10 has M circular teeth 14 (8), the externally toothed non-circular gear 30 has N circular teeth 14 (16), and the number of teeth of the externally toothed non-circular gear 30 is N/M (i.e., 2) times the number of teeth of the externally toothed circular gear 10. Based thereon, the size of the externally toothed non-circular gear 30 is twice that of the externally toothed circular gear 10. More specifically, a value M/(M+N) times the inter-axis distance D (1/3) is used as the pitch radius R1 of the pitch circle PC1 of the externally toothed circular gear 10, and a value N/(M+N) times the inter-axis distance D (2/3)is used as the pitch radius R2 of the pitch circle PC2 of the externally toothed non-circular gear 30.

### Circular Teeth 14

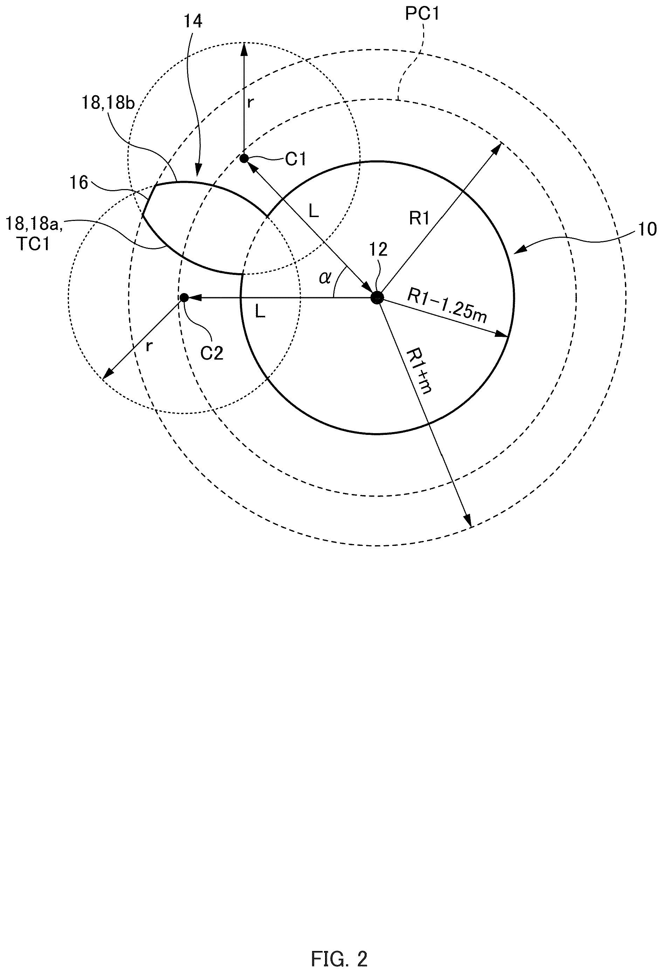

Next, the circular teeth 14 of the externally toothed circular gear 10 according to the present embodiment are described with reference to FIGS. 1 and 2. FIG. 2 is an explanatory diagram illustrating the circular teeth 14 of the externally toothed circular gear 10 according to the present embodiment. For ease of understanding, only one circular tooth 14 is shown in FIG. 2 and the other circular teeth 14 are omitted.

The circular teeth 14 have tooth side portions with a circular curve different from the involute curve generally used in gears. That is, the circular teeth 14 have a circular gear tooth tip portion 16 and a circular gear tooth side portion 18 with a radius r located on the sides of the circular gear tooth tip portion 16. Two tooth sides are provided as the circular gear tooth side portion 18 (referred to as a first circular gear tooth side portion 18a and a second circular gear tooth side portion 18b, both of which have the same radius r).

The second circular gear tooth side portion 18b is provided on a side opposite the first circular gear tooth side portion 18a as viewed from the circular gear tooth tip portion 16. The center C2 of the second circular gear tooth side portion 18b is different from the center C1 of the first circular gear tooth side portion 18a. The distance L from the first central axis 12 to the center C1 is the same as the distance L from the first central axis 12 to the center C2 (this distance L can be set arbitrarily). The radius r and the circular pitch angle α shown in FIG. 2 (the tooth width can be adjusted by adjusting this angle) can also be set arbitrarily.

The tooth height can also be set arbitrarily, but in the present embodiment, a module m (= pitch circle radius R1 × 2 / number of teeth M) is used to cut a circle at a position -1.25 × m on the inside and a position + m on the outside of a pitch circle PC1 of radius R1 to form the circular tooth 14.

### Non-Circular Teeth 34

Next, a description is given of the non-circular teeth 34 of the externally toothed non-circular gear 30 according to the present embodiment. As described below, the shape of the non-circular teeth 34 is an offset epitrochoid curve OEP that is an offset of the epitrochoid curve EP.

### Epitrochoid Curve EP

A trochoid curve is defined as a curve drawn by fixed points (also called drawing points) inside or outside a circle when the circle is rolled along a curve (a circle being a special case) without slipping. In particular, a curve made up of two circumscribed circles (i.e., a curve drawn by drawing points inside or outside the moving circle when the moving circle is rolled along a fixed circle without slipping) is called an epitrochoid curve EP.

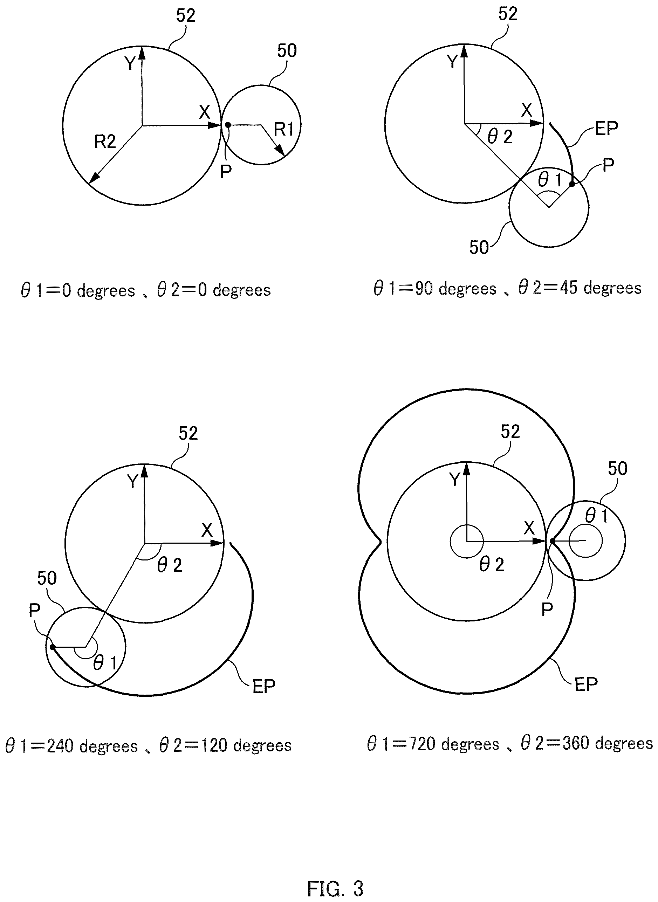

FIG. 3 is a diagram showing how to draw an epitrochoid curve EP. In the upper left diagram, a fixed circle (second friction wheel 52) is located on the left side, and a moving circle (first friction wheel 50) is located on the right side. In this example, the radius of the fixed circle (second friction wheel 52) is twice the radius of the moving circle (first friction wheel 50), and the drawing point P is located within the moving circle (first friction wheel 50) and on the X-axis. From this state, the moving circle (first friction wheel 50) revolves while rotating along the fixed circle (second friction wheel 52) (upper left diagram → upper right diagram → lower left diagram → lower right diagram. θ1 represents the rotation angle, and θ2 represents the revolution angle). When the revolution angle reaches 360 degrees, the moving circle (first friction wheel 50) returns to its original position. When the moving circle (first friction wheel 50) moves, the trajectory drawn by the drawing point P becomes the epitrochoid curve EP.

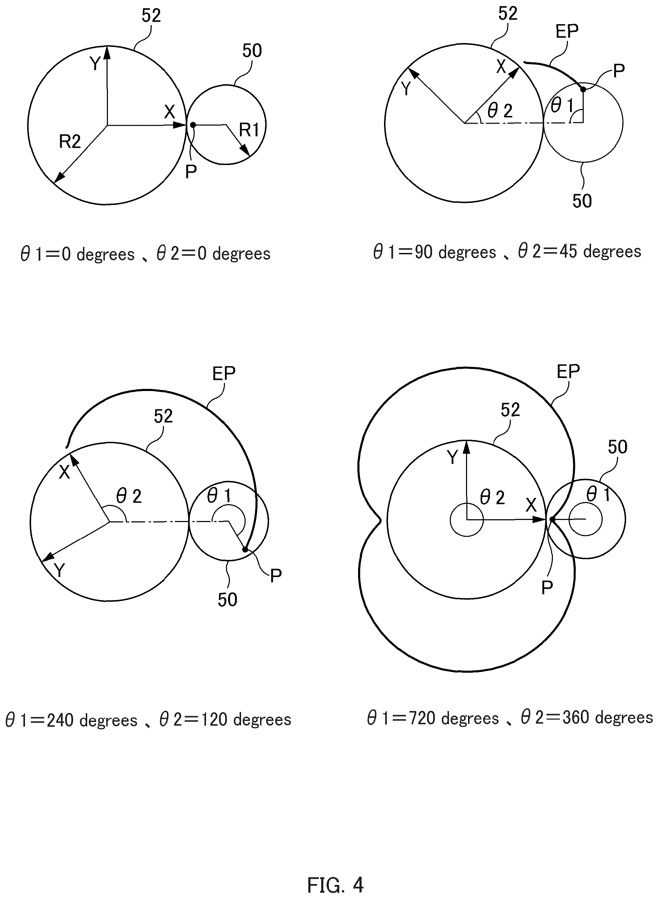

The method of drawing the epitrochoid curve EP shown in FIG. 3 above is in accordance with the definition of the epitrochoid curve EP, but there are other ways to draw it. FIG. 4 shows another way to draw the epitrochoid curve EP.

Whereas in the example of FIG. 3 the second friction wheel 52 is fixed, in this example the second friction wheel 52 rotates. Also, in the example of FIG. 3, the first friction wheel 50 revolves while rotating, but in this example, the first friction wheel 50 only rotates and does not revolve. That is, in this example, the first friction wheel 50 and the second friction wheel 52 rotate (free-rotate) so as not to slip along each other, with the rotation centers of the first friction wheel 50 and the second friction wheel 52 fixed (upper left figure → upper right figure → lower left figure → lower right figure. θ1 represents the rotation angle of the first friction wheel 50, and θ2 represents the rotation angle of the second friction wheel 52). Then, when the first friction wheel 50 moves, the trajectory drawn by the drawing point P (the disposition of the drawing point P is the same as in the example of FIG. 3) becomes an epitrochoid curve EP, but in this example, the XY coordinate system rotates together with the rotation of the second friction wheel 52 (therefore, the trajectory drawn in the past moves together with the rotation of the XY coordinate system). In this way, in this example, when the second friction wheel 52 is rotated, the first friction wheel 50 rolls without slipping, and the path drawn by the drawing point P is drawn from the XY coordinate system fixed to the second friction wheel 52. The lower right diagram of FIG. 4 shows the state in which the first friction wheel 50 rotates twice (θ1 = 720 degrees), the second friction wheel 52 rotates once (θ2 = 360 degrees), the XY coordinate system returns to its original position, and the epitrochoid curve EP is drawn. As is clear from a comparison with the lower right diagram of FIG. 3, the method of this example can also draw the same epitrochoid curve EP as shown in FIG. 3.

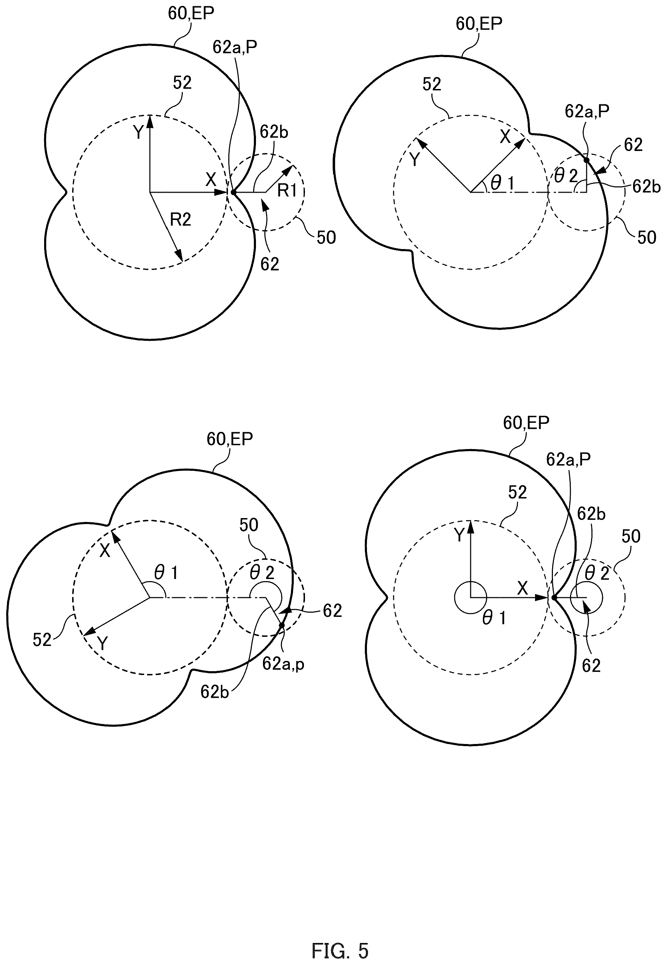

Next, consider the behavior of the cam mechanism when we assume that the epitrochoid curve EP is a cam 60 and the drawing point P is a cam follower 62a with a radius of 0 (in other words, a diameter that is infinitely close to 0). FIG. 5 is an explanatory diagram illustrating the behavior of a cam mechanism that includes a cam 60 related to the epitrochoid curve EP and a cam follower 62a with a radius of 0.

FIG. 5 is basically the same as FIG. 4. However, in FIG. 5, the epitrochoid curve EP depicted in FIG. 4 is shown in four full figures (the epitrochoid curve EP is shown in its entirety not only in the lower right figure but also in the upper left, upper right and lower left figures), and this is the cam 60. In addition, the depicted point P in FIG. 4 is a cam follower 62a with a radius of 0 (in other words, a diameter infinitely close to 0), the part from the depicted point P to the center of the first friction wheel 50 is an arm 62b, and a follower 62 having the cam follower 62a and the arm 62b is assumed.

Then, as illustrated in FIG. 5, when the epitrochoid curve EP rotates with the rotation of the second friction wheel 52 (upper left diagram → upper right diagram → lower left diagram → lower right diagram), the drawing point P, which moves with the rotation of the first friction wheel 50, moves on the epitrochoid curve EP. In other words, the cam 60 (epitrochoid curve EP) and the cam follower 62a (drawing point P) move in a state of being engaged (in contact) with each other.

Furthermore, since the first friction wheel 50 and the second friction wheel 52 rotate without slipping on each other, when the second friction wheel 52 rotates at a constant speed, the first friction wheel 50 also rotates at a constant speed. This relationship also applies to the cam 60 (epitrochoid curve EP) and the cam follower 62a (drawing point P). That is, when the second friction wheel 52 rotates at a constant speed, the cam 60 (epitrochoid curve EP) that rotates with the second friction wheel 52 also rotates at a constant speed, and the cam follower 62a (drawing point P) that rotates with the first friction wheel 50 that rotates at a constant speed also rotates at a constant speed. In this way, the cam 60 (epitrochoid curve EP) and the cam follower 62a (drawing point P) perform a uniform rotational motion together while being engaged (in contact) with each other. That is, a situation in which the cam follower 62a (drawing point P) is unstable and the speed varies (hereinafter referred to as speed variation) even though the cam 60 (epitrochoid curve EP) rotates at a constant speed is appropriately suppressed.

### Offset Epitrochoid Curve OEP

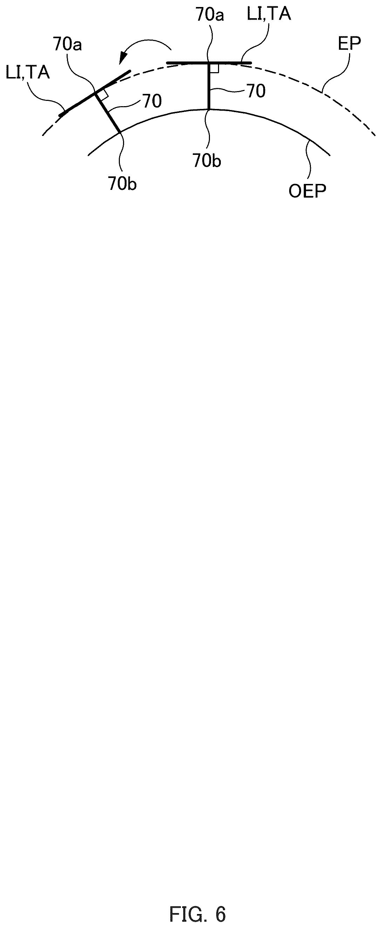

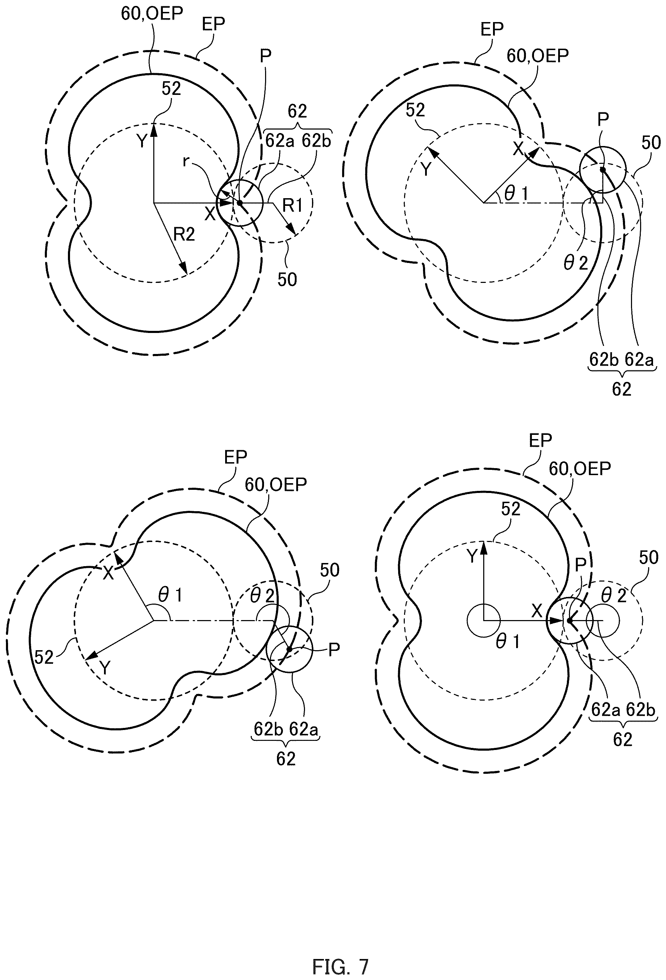

In the above description, the epitrochoid curve EP is assumed to be the cam 60 and the drawing point P is assumed to be the cam follower 62a with a radius of 0 (in other words, a diameter that is infinitely close to 0). Here, however, the behavior of the cam mechanism is considered when an offset epitrochoid curve OEP associated with the epitrochoid curve EP is defined, the offset epitrochoid curve OEP is assumed to be the cam 60, and a circle with a radius of r centered on the drawing point P of the epitrochoid curve EP is assumed to be the cam follower 62a. FIG. 6 is an explanatory diagram illustrating the offset epitrochoid curve OEP. FIG. 7 is an explanatory diagram illustrating the behavior of a cam mechanism including a cam 60 related to the offset epitrochoid curve OEP and a cam follower 62a related to a circle with a radius of r.

A tangent line TA is drawn at each point along the epitrochoid curve, and a point is taken that is offset a certain distance inward from each point in the normal direction to the tangent line TA. The curve connecting these points is defined as the offset epitrochoid curve OEP. In other words, as shown in FIG. 6, the trajectory of an inner end 70b of a bar 70, when the bar 70 is moved so that a line LI perpendicular to the bar 70 at an outer end 70a of the bar 70 always becomes the tangent line TA to the epitrochoid curve EP, becomes the offset epitrochoid curve OEP.

Then, assume the offset epitrochoid curve OEP with the fixed distance as a length r (i.e., the offset epitrochoid curve OEP offset by the length r from the epitrochoid curve EP) is the cam 60, and the circle with a radius of r centered on the drawing point P of the epitrochoid curve EP is the cam follower 62a. That is, in FIG. 7, the offset epitrochoid curve OEP offset by the length r from the epitrochoid curve EP is shown in all four diagrams, and this is set as the cam 60. In addition, a circle with a radius of r centered on the drawing point P is set as the cam follower 62a, the arm 62b extends from the drawing point P to the center of the first friction wheel 50, and a follower 62 having the cam follower 62a and the arm 62b is assumed.

Then, as shown in FIG. 7, when the offset epitrochoid curve OEP rotates with the rotation of the second friction wheel 52 (epitrochoid curve EP) (upper left diagram → upper right diagram → lower left diagram → lower right diagram), the cam follower 62a, which moves with the rotation of the first friction wheel 50 (drawing point P), operates while maintaining a state of contact with the offset epitrochoid curve OEP. In other words, the cam 60 (offset epitrochoid curve OEP offset by a length r from the epitrochoid curve EP) and the cam follower 62a (circle of radius r) move in a state of engagement (contact) with each other.

Furthermore, since the first friction wheel 50 and the second friction wheel 52 rotate without slipping against each other, when the second friction wheel 52 rotates at a constant speed the first friction wheel 50 also rotates at a constant speed. This relationship also applies to the cam 60 (offset epitrochoid curve OEP offset by a length r from the epitrochoid curve EP) and the cam follower 62a (circle with radius r). That is, when the second friction wheel 52 rotates at a constant speed, the cam 60 (offset epitrochoid curve OEP) that rotates with the second friction wheel 52 also rotates at a constant speed, and the cam follower 62a (circle with radius r) that rotates with the first friction wheel 50 that rotates at a constant speed (revolving around the center of the first friction wheel 50) also rotates at a constant speed. In this way, the cam 60 (offset epitrochoid curve OEP) and the cam follower 62a (circle with radius r) perform a constant speed rotational motion together while engaged (in contact) with each other. That is, a situation in which the cam follower 62a (circle of radius r) is unstable and the speed varies (speed variation) even though the cam 60 (offset epitrochoid curve OEP) rotates at a constant speed is appropriately suppressed.

### Shape of Non-Circular Teeth 34

As described above, assuming that the offset epitrochoid curve OEP obtained by offsetting the epitrochoid curve EP by a length r is the cam 60, and the cam follower 62a is the circle of radius r centered on the drawing point P of the epitrochoid curve EP, this cam mechanism exerts an effect of appropriately suppressing speed variation (hereinafter also referred to as the speed variation suppression effect). Therefore, this matter is adapted (applied) to the design of the teeth of the gear mechanism 1.

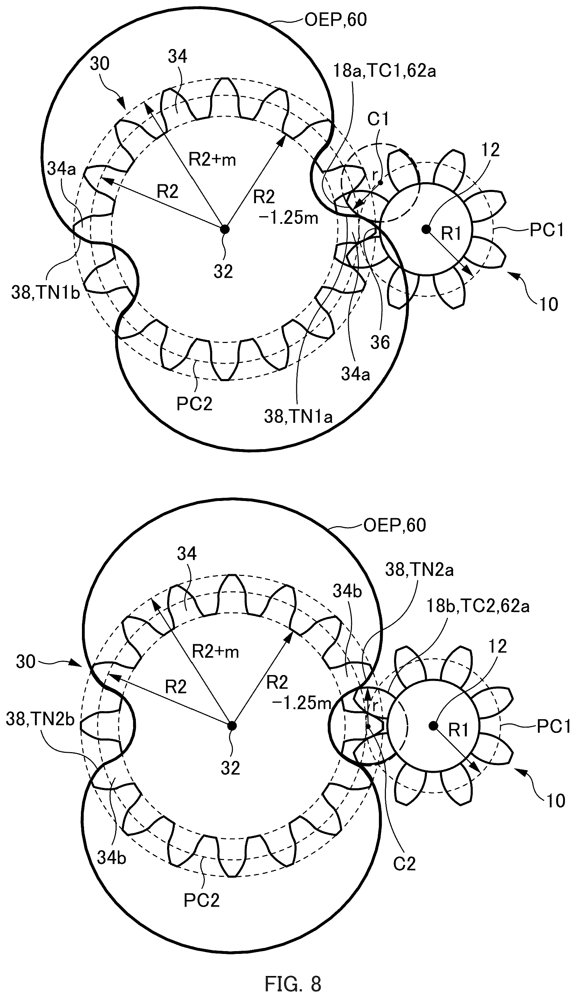

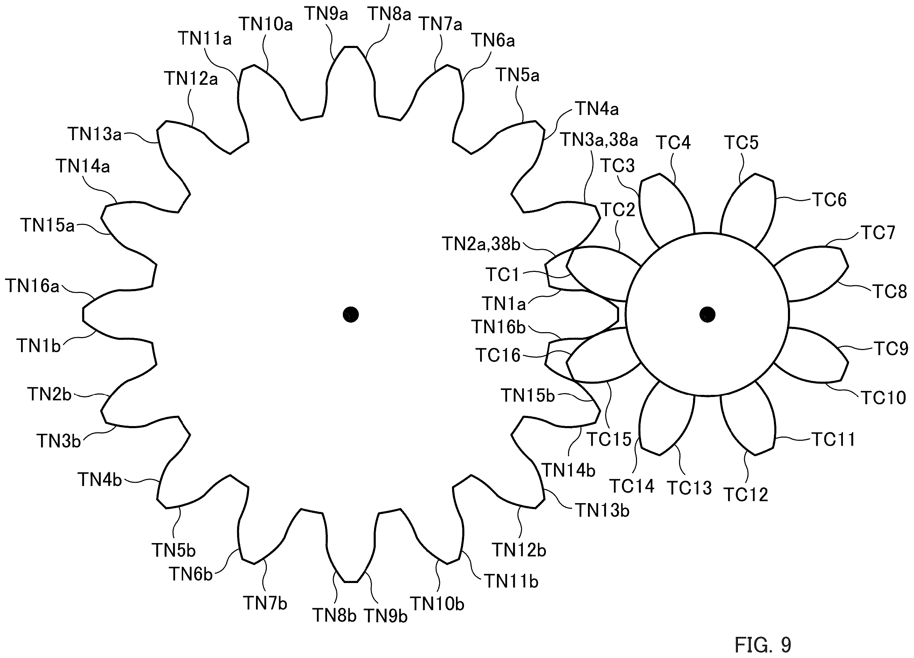

A description is given of this point using FIGS. 1, 2, and 7-9. FIG. 8 is an explanatory diagram illustrating the non-circular teeth 34 of the externally toothed non-circular gear 30 according to the present embodiment. A description of FIG. 9 is deferred.

As described above, the circular tooth 14 has a circular gear tooth side portion 18 (first circular gear tooth side portion 18a and second circular gear tooth side portion 18b) with a circular curve. Here, since the circular gear tooth side portion 18 is part of a circle with a radius of r, the first circular gear tooth side portion 18a (for example, the circular gear tooth side portion 18 indicated by reference symbol TC1) of one circular tooth 14 can correspond to the cam follower 62a (see the upper diagrams of FIGS. 7 and 8). In this case, a virtual circle of radius R2 (= inter-axis distance D × number of teeth N / (number of teeth M + number of teeth N)) centered on the second central axis 32 is defined as a fixed circle (second friction wheel 52), a virtual circle of radius R1 (= inter-axis distance D × number of teeth M / (number of teeth M + number of teeth N)) centered on the first central axis 12 is defined as a moving circle (first friction wheel 50), and the center C1 of the first circular gear tooth side portion TC1 is defined as a drawing point P. The drawn epitrochoid curve EP is offset by a length r to form an offset epitrochoid curve OEP (see FIG. 7), which corresponds to the cam 60. Therefore, if the shape of the non-circular gear tooth side portion 38 in contact with the circular gear tooth side portion 18 (first circular gear tooth side portion 18a) is set to the offset epitrochoid curve OEP (see the upper diagram in FIG. 8), a gear mechanism 1 with a speed variation suppression effect can be achieved.

In this way, the shape of at least a part of the non-circular gear tooth side portion 38 in the present embodiment is such that when a virtual circle of radius R2 (= inter-axis distance D × number of teeth N / (number of teeth M + number of teeth N)) centered on the second central axis 32 is taken as a fixed circle (second friction wheel 52), a virtual circle of radius R1 (= inter-axis distance D × number of teeth M / (number of teeth M + number of teeth N)) centered on the first central axis 12 is taken as a moving circle (first friction wheel 50), and the center C1 of the first circular gear tooth side portion 18a is taken as the drawing point P, the drawn epitrochoid curve EP becomes an offset epitrochoid curve OEP (see FIG. 7 ) offset by a length r.

Like the circular teeth 14, the non-circular teeth 34 have a non-circular gear tooth tip portion 36 in addition to a non-circular gear tooth side portion 38. In other words, the non-circular teeth 34 have the non-circular gear tooth tip portion 36 and the non-circular gear tooth side portion 38 located on the sides of the non-circular gear tooth tip portion 36.

A specific example of the design of the non-circular teeth 34 according to the present embodiment is as follows. First, one first circular gear tooth side portion 18a (for example, the circular gear tooth side portion 18 indicated by reference symbol TC1) is selected and the offset epitrochoid curve OEP corresponding thereto is drawn. Then, as with the circular tooth 14, for a portion of the offset epitrochoid curve OEP that may contact the first circular gear tooth side portion TC1, the offset epitrochoid curve OEP is cut at a position -1.25×m inward and +m outward based on the pitch circle PC2 of radius R2, and this is defined as the non-circular gear tooth side portion 38 (designated by reference symbol TN1a) of the non-circular tooth 34 (however, the tooth height can be set arbitrarily, as with the circular teeth 14).

In the present embodiment, the number of teeth of the externally toothed non-circular gear 30 is twice the number of teeth of the externally toothed circular gear 10, so that the externally toothed non-circular gear 30 rotates once while the externally toothed circular gear 10 rotates twice. Therefore, there are two non-circular gear tooth side portions 38 that contact the first circular gear tooth side portion TC1, so the non-circular gear tooth side portion 38 (indicated by the symbol TN1b) is also a cut of the offset epitrochoid curve OEP that is point-symmetrical to the non-circular gear tooth side portion TN1a as viewed from the second central axis 32. Due to the foregoing design, the non-circular gear tooth side portions TN1a and TN1b according to the present embodiment have an overall shape that is the offset epitrochoid curve OEP, and therefore the non-circular gear tooth side portions TN1a and TN1b are formed so that the shape of all the portions that contact the circular gear tooth side portion 18 is the offset epitrochoid curve OEP.

Next, the above-mentioned items (procedures) are performed on the second circular gear tooth side portion 18b (designated by reference symbol TC2) provided on the opposite side of the first circular gear tooth side portion TC1 as viewed from the circular gear tooth tip portion 16 (see the lower diagram in FIG. 8). That is, the offset epitrochoid curve OEP corresponding to the second circular gear tooth side portion TC2 is drawn. Then, for a portion of the offset epitrochoid curve OEP that may contact the second circular gear tooth side portion TC2, the offset epitrochoid curve OEP is cut at a position -1.25×m inward and +m outward based on the pitch circle PC2 of radius R2, and this is defined as the non-circular gear tooth side portion 38 (designated by reference symbol TN2a) of the non-circular tooth 34. Furthermore, a cut of the offset epitrochoid curve OEP located point-symmetrically to the non-circular gear tooth side portion TN2a as viewed from the second central axis 32 is also referred to as a non-circular gear tooth side portion 38 (denoted by reference symbol TN2b). Note that the non-circular gear tooth side portion TN2a (non-circular gear tooth side portion TN2b) is a tooth side portion of another (adjacent) non-circular tooth 34 (also referred to as a second non-circular tooth 34b) different from the non-circular gear tooth 34 (also referred to as a first non-circular gear tooth 34a) having the non-circular gear tooth side portion TN1a (non-circular gear tooth side portion TN1b).

Then, by carrying out the above-mentioned items (procedures) on the other seven circular teeth 14, all of the non-circular teeth 34 can be obtained. FIG. 9 is a diagram showing the correspondence of the tooth sides. The non-circular gear tooth side portion 38 obtained by carrying out the above-mentioned procedures on the first circular gear tooth side portion TC1 (TC3, TC5, TC7, TC9, TC11, TC13, TC15) is indicated by symbols TN1a and TN1b (TN3a and TN3b, TN5a and TN5b, TN7a and TN7b, TN9a and TN9b, TN11a and TN11b, TN13a and TN13b, TN15a and TN15b), and the non-circular gear tooth side portion 38 obtained by subjecting the second circular gear tooth side portions TC2 (TC4, TC6, TC8, TC10, TC12, TC14, TC16) to the above procedure is indicated by the symbols TN2a and TN2b (TN4a and TN4b, TN6a and TN6b, TN8a and TN8b, TN10a and TN10b, TN12a and TN12b, TN14a and TN14b, TN16a and TN16b).

Like the circular gear tooth side portion 18, the non-circular gear tooth 34 also has two non-circular gear tooth side portions 38, namely, a first non-circular gear tooth side portion 38a (e.g., the non-circular gear tooth side portion 38 indicated by the reference symbol TN3a) and a second non-circular gear tooth side portion 38b (e.g., the non-circular gear tooth side portion 38 indicated by the reference symbol TN2a) provided on the opposite side of the first non-circular gear tooth side portion 38a as viewed from the non-circular gear tooth tip portion 36.

In the above description, the externally toothed non-circular gear 30 is formed by carrying out the above steps when the externally toothed circular gear 10 is in the rotation position shown in FIG. 9, but this rotation position is arbitrary. For example, a similar externally toothed non-circular gear 30 can be formed even if the above steps are carried out when the externally toothed circular gear 10 is in a position slightly rotated from the rotation position shown in FIG. 9.

Effectiveness of Gear Mechanism 1 According to the Embodiment As described above, the gear mechanism 1 of the present embodiment comprises the externally toothed circular gear 10, which has M circular teeth 14 and rotates around the first central axis 12, and the externally toothed non-circular gear 30, which has N non-circular teeth 34 and rotates around the second central axis 32 a predetermined distance D away from the first central axis 12. The circular teeth 14 of the externally toothed circular gear 10 have a circular gear tooth tip portion 16 and a circular gear tooth side portion 18 (for example, a first circular gear tooth side portion 18a indicated by symbol TC1 in FIG. 8), located on the sides of the circular gear tooth tip portion 16 and of a circular shape of radius r.

The non-circular tooth 34 of the externally toothed non-circular gear 30 has a non-circular gear tooth tip portion 36 and a non-circular gear tooth side portion 38 (e.g., non-circular gear tooth side portion 38 indicated by reference characters TN1a and TN1b in FIG. 8) located on the sides of the non-circular gear tooth tip portion 36 and in contact with the circular gear tooth side portion 18 (e.g., the first circular gear tooth side portion 18a indicated by reference character TC1 in FIG. 8). At least a part of the non-circular gear tooth side portion 38 (e.g., the non-circular gear tooth side portion 38 indicated by reference characters TN1a and TN1b in FIG. 8) has a shape such that, when a virtual circle of radius R2 (= inter-axis distance D × number of teeth N / (number of teeth M + number of teeth N)) centered on the second central axis 32 is defined as a fixed circle (second friction wheel 52), a virtual circle of radius R1 (= inter-axis distance D × number of teeth M / (number of teeth M + number of teeth N)) centered on the first central axis 12 is defined as a moving circle (first friction wheel 50), and the center C1 of the first circular gear tooth side portion 18a is defined as the drawing point P, the drawn epitrochoid curve EP becomes the offset epitrochoid curve OEP (see FIG. 7) offset by a length r.

Therefore, as described above, it is possible to achieve the gear mechanism 1 that exhibits the effect of suppressing speed variation.

Furthermore, in the present embodiment, the non-circular gear tooth side portion 38 (for example, the non-circular gear tooth side portions 38 denoted by reference characters TN1a and TN1b in FIG. 8) and the first circular gear tooth side portion 18a denoted by reference character TC1 in FIG. 8) are formed so that the shape of all of the portions in contact with the circular gear tooth side portion 18 are offset by a length r from the epitrochoid curve EP drawn when a virtual circle of radius R2 (= inter-axis distance D × number of teeth N / (number of teeth M + number of teeth N)) centered on the second central axis 32 is taken as a fixed circle (second friction wheel 52), a virtual circle of radius R1 (= inter-axis distance D × number of teeth M / (number of teeth M + number of teeth N)) centered on the first central axis 12 is taken as a moving circle (first friction wheel 50), and the center C1 of the first circular gear tooth side portion 18a is taken as the drawing point P, forming an offset epitrochoid curve OEP (see FIG. 7) offset by a length r from the epitrochoid curve EP drawn.

Therefore, it is possible to achieve a gear mechanism 1 that can more appropriately suppress speed variation.

The circular gear tooth side portion 18 includes a first circular gear tooth side portion 18a and the circular teeth 14 of the externally toothed circular gear 10 are provided with a second circular gear tooth side portion 18b located on the sides of the circular gear tooth tip portion 16 having a circular shape of radius r located on the opposite side of the first circular gear tooth side portion 18a (for example, the first circular gear tooth side portion 18a indicated by reference symbol TC1 in FIG. 8) as viewed from the circular gear tooth tip portion 16, with the second circular gear tooth side portion 18b having a center different from a center of the first circular gear tooth side portion 18a (for example, the second circular gear tooth side portion 18b indicated by reference symbol TC2 in FIG. 8). The non-circular teeth 34 are non-circular teeth 34a (see the upper diagram in FIG. 8) and the externally toothed non-circular gear 30 has second non-circular teeth 34b different from the first non-circular teeth 34a (see the lower diagram in FIG. 8). The second non-circular teeth 34b of the externally toothed non-circular gear 30 have a non-circular gear tooth tip portion 36 and a non-circular gear tooth side portion 38 (e.g., non-circular gear tooth side portion 18b indicated by reference characters TN2a and TN2b in FIG. 8) in contact with the second circular gear tooth side portion 18b (e.g., the second circular gear tooth side portion 18b indicated by reference character TC2 in FIG. 8) located on the sides of the non-circular gear tooth tip portion 36. At least a part of the shape of the non-circular gear tooth side portion 38 of the second non-circular tooth 34b (e.g., the non-circular gear tooth side portion 38 indicated by reference characters TN2a and TN2b in FIG. 8) is formed such that, when an imaginary circle of radius R2 (= inter-axis distance D × number of teeth N / (number of teeth M + number of teeth N)) is taken as a fixed circle (second friction wheel 52), an imaginary circle of radius R1 (= inter-axis distance D × number of teeth M / (number of teeth M + number of teeth N)) centered on the first central axis 12 is taken as a moving circle (first friction wheel 50), and the center C2 of the second circular gear tooth side portion is taken as the drawing point P, the drawn epitrochoid curve EP is formed to be an offset epitrochoid curve OEP (see FIG. 7) offset by a length r.

Therefore, it is possible to achieve a gear mechanism 1 that more appropriately exhibits the effect of suppressing speed variation.

Furthermore, in the present embodiment, the non-circular gear tooth side portion 38 of the second non-circular gear tooth 34b (for example, the non-circular gear tooth side portion 38 shown by the symbols TN2a and TN2b in FIG. 8) is such that the shape of all the parts in contact with the second circular gear tooth side portion 18b (for example, the second circular gear tooth side portion 18b shown by the symbol TC2 in FIG. 8) is an offset epitrochoid curve OEP (see FIG. 7) that is offset by a length r from the epitrochoid curve EP drawn when a virtual circle of radius R2 (= inter-axis distance D × number of teeth N / (number of teeth M + number of teeth N)) centered on the second central axis 32 is a fixed circle (second friction wheel 52), a virtual circle of radius R1 (= inter-axis distance D × number of teeth M / (number of teeth M + number of teeth N)) centered on the first central axis 12 is a moving circle (first friction wheel 50), and the center C2 of the second circular gear tooth side portion is a drawing point P.

Therefore, it is possible to achieve a gear mechanism 1 that more appropriately exhibits the effect of suppressing speed variation.

### Other Embodiments

Although the gear mechanism according to the present invention has been described above based on the above embodiment, the above embodiment is for the purpose of facilitating understanding of the present invention and does not limit the present invention. The present invention can be modified and improved without departing from the spirit and scope of the present invention, and of course, equivalents thereof are included in the present invention.

### Explanation of Reference Symbols

- 1: Gear mechanism
- 10: Externally toothed circular gear
- 12: First central axis
- 14: Circular tooth
- 16: Circular gear tooth tip portion
- 18: Circular gear tooth side portion
- 18a: First circular gear tooth side portion
- 18b: Second circular gear tooth side portion
- 30: Externally toothed non-circular gear
- 32: Second central axis
- 34: Non-circular teeth
- 34a: First non-circular tooth
- 34b: Second non-circular tooth
- 36: Non-circular gear tooth tip portion
- 38: Non-circular gear tooth side portion
- 38a: First non-circular gear tooth side portion
- 38b: Second non-circular gear tooth side portion
- 50: First friction wheel
- 52: Second friction wheel
- 60: Cam
- 62: Follower
- 62a: Cam follower
- 62b: Arm
- 70: Bar
- 70a: Outer end
- 70b: Inner end
- C1: Center
- C2: Center
- D: Inter-axis distance
- EP: Epitrochoid curve
- L: Distance
- LI: Line
- OEP: Offset epitrochoid curve
- P: Drawing point
- PC1: Pitch circle
- PC2: Pitch circle
- R1: Pitch circle radius
- R2: Pitch circle radius
- TA: Tangent
- α: Circular pitch angle
- TC1: First circular gear tooth side portion
- TC2: Second circular gear tooth side portion
- TC3: First circular gear tooth side portion
- TC4: Second circular gear tooth side portion
- TC5: First circular gear tooth side portion
- TC6: Second circular gear tooth side portion
- TC7: First circular gear tooth side portion
- TC8: Second circular gear tooth side portion
- TC9: First circular gear tooth side portion
- TC10: Second circular gear tooth side portion
- TC11: First circular gear tooth side portion
- TC12: Second circular gear tooth side portion
- TC13: First circular gear tooth side portion
- TC14: Second circular gear tooth side portion
- TC15: First circular gear tooth side portion
- TC16: Second circular gear tooth side portion
- TN1a,: TN1b Non-circular gear tooth side portion
- TN2a,: TN2b Non-circular gear tooth side portion
- TN3a,: TN3b Non-circular gear tooth side portion
- TN4a,: TN4b Non-circular gear tooth side portion
- TN5a,: TN5b Non-circular gear tooth side portion
- TN6a,: TN6b Non-circular gear tooth side portion
- TN7a,: TN7b Non-circular gear tooth side portion
- TN8a,: TN8b Non-circular gear tooth side portion
- TN9a,: TN9b Non-circular gear tooth side portion
- TN10a,: TN10b Non-circular gear tooth side portion
- TN11a,: TN11b Non-circular gear tooth side portion
- TN12a,: TN12b Non-circular gear tooth side portion
- TN13a,: TN13b Non-circular gear tooth side portion
- TN14a,: TN14b Non-circular gear tooth side portion
- TN15a,: TN15b Non-circular gear tooth side portion
- TN16a,: TN16b Non-circular gear tooth side portion

## Claims

1. A gear mechanism comprising
an externally toothed circular gear having M circular teeth and rotating around a first central axis, and
an externally toothed non-circular gear having N non-circular teeth and rotating around a second central axis separated by a predetermined distance D from the first central axis;
the circular teeth of the externally toothed circular gear having
a circular gear tooth tip portion and
a circular gear tooth side portion located on sides of the circular gear tooth tip portion and having a circular shape of radius r;
the non-circular teeth of the externally toothed non-circular gear having
a non-circular gear tooth tip portion and
a non-circular gear tooth side portion located on sides of the non-circular gear tooth tip portion and in contact with the circular gear tooth side portion; and
at least a part of the non-circular gear tooth side portion has a shape such that, when a virtual circle of radius D×N/(M+N) centered on the second central axis is defined as a fixed circle, a virtual circle of radius D×M/(M+N) centered on the first central axis is defined as a moving circle, and the center of the circular gear tooth side portion is defined as a drawing point, a drawn epitrochoid curve is offset by a length r and becomes an offset epitrochoid curve.

2. The gear mechanism according to claim 1, wherein
a shape of all of the non-circular gear tooth side portion that contacts the circular gear tooth side portion is such that, when a virtual circle of radius D×N/(M+N) centered on the second central axis is defined as a fixed circle, a virtual circle of radius D×M/(M+N) centered on the first central axis is defined as a moving circle, and the center of the circular gear tooth side portion is defined as a drawing point, a drawn epitrochoid curve is offset by a length r and becomes an offset epitrochoid curve.

3. The gear mechanism according to claim 1 or 2, wherein
the circular gear tooth side portion is a first circular gear tooth side portion;
the circular teeth of the externally toothed circular gear are provided with a second circular gear tooth side portion located on sides of the circular gear tooth tip portion and having a circular shape of radius r located opposite the first circular gear tooth side portion as viewed from the circular gear tooth tip portion,
the second circular gear tooth side portion having a center different from a center of the first circular gear tooth side portion;
the non-circular teeth are first non-circular teeth;
the externally toothed non-circular gear has second non-circular teeth different from the first non-circular teeth;
the second non-circular teeth of the externally toothed non-circular gear have a non-circular gear tooth tip portion and a non-circular gear tooth side portion located on sides of the non-circular gear tooth tip portion and in contact with the second circular gear tooth side portion; and
at least a part of the non-circular gear tooth side portion has a shape such that, when a virtual circle of radius D×N/(M+N) centered on the second central axis is defined as a fixed circle, a virtual circle of radius D×M/(M+N) centered on the first central axis is defined as a moving circle, and the center of the second circular gear tooth side portion is defined as a drawing point, a drawn epitrochoid curve is offset by a length r and becomes an offset epitrochoid curve.

4. The gear mechanism according to claim 3, wherein
a shape of all of the non-circular gear tooth side portion of the second non-circular teeth that contacts the second circular gear tooth side portion is such that, when a virtual circle of radius D×N/(M+N) centered on the second central axis is defined as a fixed circle, a virtual circle of radius D×M/(M+N) centered on the first central axis is defined as a moving circle, and the center of the second circular gear tooth side portion is defined as a drawing point, a drawn epitrochoid curve is offset by a length r and becomes an offset epitrochoid curve.
